# EUROPÄISCHE PATENTSCHRIFT

(11) **EP 2 918 406 B1**
(45) Veröffentlichungstag und Bekanntmachung des Hinweises auf die Patenterteilung: **04.09.2019**
(21) Anmeldenummer: 15158355.6
(22) Anmeldetag: 10.03.2015
(51) Int. Cl.: B32B 5/00, B32B 5/02, B32B 5/22, B32B 5/28, B32B 7/00, B32B 7/02, B32B 15/14, B32B 3/00, B32B 3/02, B32B 5/14, B32B 15/18, B32B 15/20, B32B 3/04, B32B 3/30, B32B 7/05

(54) **MATERIALVERBUND AUS METALL / DLC / FASERVERSTÄRKTEM KUNSTSTOFF**
MATERIAL COMPOSITE COMPOSED OF METAL/DLC/FIBRE-REINFORCED PLASTIC
MATÉRIAU COMPOSITE EN MÉTAL / DLC / MATIÈRE SYNTHÉTIQUE RENFORCÉE EN FIBRES

(30) Priorität: 14.03.2014 DE 202014101175 U
(43) Veröffentlichungstag der Anmeldung: 16.09.2015
(73) Patentinhaber: AxynTeC Dünnschichttechnik GmbH, 86167 Augsburg (DE)
(72) Erfinder: Kuhn, Marcus,, 86179 Augsburg (DE); Hammerl, Claus,, 86316 Friedberg (DE)
(74) Vertreter: Kuhnen & Wacker Patent- und Rechtsanwaltsbüro PartG mbB

(56) Entgegenhaltungen:
- EP-A2- 0 691 413
- US-A- 5 187 021
- US-A- 5 435 815
- US-A1- 2010 143 690
- US-A1- 2012 039 017
- US-A1- 2012 077 017
- US-B1- 6 221 795

## Beschreibung

Die Erfindung betrifft einen Materialverbund bestehend aus einem ersten Material aus Metall mit einer auf zumindest einer ersten Oberfläche des ersten Materials aufgebrachten Beschichtung, die diamantähnlichen Kohlenstoff (DLC) enthält und einem mit der Beschichtung verbundenen zweiten Material aus faserverstärktem Kunststoff.

Faserverbundwerkstoffe besitzen heute eine große Bedeutung in verschiedensten Anwendungsgebieten. Je nach Art der verwendeten Faser unterscheidet man dabei zum Beispiel zwischen glasfaserverstärkten Kunststoffen (GFK), synthese- oder chemiefaserverstärkten Kunststoffen (SFK) und kohlenstofffaserverstärkten Kunststoffen (CFK) (karbonfaserverstärkter Kunststoff, engl. carbon fiber reinforced plastic CFRP). Vor allem werden hochfeste und hochsteife Verbundwerkstoffe wie CFK-Verbundwerkstoffe wegen ihrem geringen spezifischem Gewicht in der Luft- und Raumfahrttechnik und der modernen Automobiltechnologie verwendet. Sowohl im Flugzeugbau als auch im Automobilbau werden bis heute für Strukturbauteile noch überwiegend Metalle verwendet, welche hinsichtlich der mechanischen und technologischen Eigenschaften und ihres Langzeitverhaltens während der Lebensdauer des Fahrzeugs sehr gut charakterisiert sind. Sie erfüllen heutzutage jedoch nicht mehr optimal die Forderungen nach Gewichtsoptimierung. In diesem Zuge wurden die oben genannten glasfaser- und insbesondere kohlenfaserverstärkten Kunststoffe entwickelt und optimiert. Auch wenn inzwischen sowohl im Automobil- als auch im Flugzeugbau beispielsweise die Verwendung von Faserverbundbauteilen weit verbreitet ist, stehen der hohen Festigkeit bei gleichzeitig geringem Gewicht der Faserverbundwerkstoffe auch unzureichende Eigenschaften wie beispielsweise geringe Verschleiß- und Erosionsfestigkeit, sowohl wie fehlende elektrische Leitfähigkeit entgegen.

Um die besten Eigenschaften der beiden Werkstoffarten Metall und faserverstärktem Kunststoff zu kombinieren wird daher derzeit der großtechnische Einsatz der Hybridbauweise, beispielsweise von CFK-Alu-Fügeverbindungen, entwickelt. Derzeit erfolgt das Verbinden dieser Materialkombination über ein adhäsives oder mechanisches Fügen. Insbesondere im Hinblick auf gewichtsoptimierte integrale Strukturen mit verbesserten mechanischen Eigenschaften sind jedoch neue Füge- und damit neue Konstruktionsmöglichkeiten von Interesse. Beispielsweise zeigt die japanische Offenlegungsschrift JP-S-6189029 A die Verwendung eines Verbindungsstiftes, um ein CFK-Material mit einer Metalloberfläche zu verzahnen, um die Verbindung und Belastbarkeit der Grenzfläche CFK/Metall zu verbessern. Auch Verfahren zur Beschichtung von CFK mit einer Metallschicht (beispielsweise Nickel) ist beispielsweise aus der JP-H-0544056 A bekannt. Während beispielsweise bei der Verbindung eines Fahrzeugrahmens aus Aluminium mit CFK-Karosseriebauteilen Kleben und/oder Nieten durchaus angebracht sein kann, erfordern andere Anwendungen wie beispielsweise Propeller von Windkraftanlagen eine andere Verbindungstechnologie, um beispielsweise die Strömungswiderstände gering zu halten. Zur Veränderung der Oberflächeneigenschaften von faserverstärkten Werkstoffen werden zur Zeit zum Beispiel Metalle oder Metallgewebe aufgeklebt, einlaminiert oder physikalisch abgeschieden. Es werden auch unterschiedliche Verfahren wie zum Beispiel Kleben, Schrauben oder Nieten von Metallen, Verbundwerkstoffen oder Dämmschichten angewendet. Beispielsweise zeigt die US 6,468,613 B1 ein CFK-Material, das auf die Oberfläche eines Leichtmetallmaterials über eine Haftvermittlerschicht mit einer Dicke von mindestens 10µm bis 500µm geklebt ist und eine Haftfestigkeit bei Raumtemperatur von mindestens 15MPa aufweist.

Die US 6,221,795 B1 offenbart ein Composit-Material mit einem Substrat welches wenigstens eine Faserschicht enthält und mit einer an das Substrat angrenzenden Deckschicht die an die wenigstens eine Faserschicht angrenzt und Metallfasern und/oder Fäden enthält. Die wenigstens eine Faserschicht des Substrates und die Matallfasern und/oder Fäden werden mit einem Bindemittel getränkt um im Ergebnis das Substrat mit der Deckschicht zu verbinden. Die Deckschicht enthält in dem Bereich der Metallfasern und/oder Fäden Metall, Keramik oder glassartige Partikel. Bevorzugterweise können die Partikel eines oder mehrere oder eine Kombination aus TiC, TiN, TiAl, Fe, Stahl, Ni, Si, Metalllegierungen, Diamant oder Glass.

Die EP 0 691 413 A2 offenbart ein diamantverstärktes Composit-Material mit verbesserter Haftung zu einer Matrix. Um die Verbindbarkeit zur Matrix zu verbessern, ist die Oberfläche des Diamantmaterials mit Al, Si oder B, oder einem ihrer Carbide oder Nitride beschichtet. Um die Verbindbarkeit zu verbessern, wird mit Bor oder N dotierter Diamant als verstärkungsmaterial verwendet. Die Matrix ist aus einem Metall, einer Keramik oder einem Harz gebildet.

Die US 5,187,021 offenbart beschichtete, nadelartige Fasern zur Verwendung in Composit-Materialien. Diamant und Keramik Nadeln werden auf Diamant, Keramik oder Metall beschichtete Fasern aufgewachsen und in Composit-Materialien verwendet. Die Nadeln verbessern die Faser-Matrix Verbindung, behalten die Fasertrennung bei und ermöglichen eine gleichmäßige Faserverteilung. Die Beschichtung verbessert die mechanischen Eigenschaften der Faser und schützt die Faser vor durch das Matrix Material verursachter Korrosion.

Die US 2012/0039017 A1 offenbart eine Kondensatorstruktur mit einer ersten Kohlenstofffasermaterialschicht, einer zweiten Kohlenstofffasermaterialschicht und einer dielektrischen Zwischenschicht mit einer diamantartigen Kohlenstoffmaterialschicht.

Aufgabe der vorliegenden Erfindung ist es, die Verbindungsfestigkeit von Metallhybridbauteilen zu verbessern.

Erfindungsgemäß wird diese Aufgabe durch einen Materialverbund und ein Verbindungselement mit den Merkmalen der Patentansprüche 1 und 7 gelöst. Eine Ausführungsform der vorliegenden Erfindung betrifft einen Materialverbund bestehend aus einem ersten Material aus Metall und einer auf zumindest einer ersten Oberfläche des ersten Materials aufgebrachten Beschichtung, die diamantähnlichen Kohlenstoff (DLC) enthält, und einem mit der Beschichtung verbundenen zweiten Material aus faserverstärktem Kunststoff (GFK, SFK, CFK-karbonfaserverstärkter Kunststoff; engl. carbon fibre reinforced plastic, CFRP).

Gemäß einer vorteilhaften Ausführungsform umfasst der Materialverbund zwischen der diamantähnlichen Kohlenstoffschicht und der ersten Oberfläche des ersten Materials eine Haftverbesserungszone, die eine Struktur aufweist, die geeignet ist eine Verzahnung der beschichteten ersten Oberfläche des ersten Materials mit dem zweiten Material zu gewährleisten und zudem die Grenzfläche des Verbunds vergrößert.

Gemäß einer weiteren vorteilhaften Ausführungsform weist die auf zumindest einer ersten Oberfläche des ersten Materials aufgebrachten Beschichtung eine Dicke in einem Bereich von 1 nm bis 10µm auf.

Gemäß einer weiteren vorteilhaften Ausführungsform ist das Metall des ersten Materials Aluminium, Titan, Stahl, Eisen, Kupfer, Magnesium, Hartmetall oder eine Legierung, die zumindest eines dieser Metalle enthält.

Gemäß einer weiteren vorteilhaften Ausführungsform ist auch eine zweite, einer ersten Oberfläche gegenüberliegende Oberfläche des ersten Materials mit einer Beschichtung, die diamantähnlichen Kohlenstoff (DLC) enthält, versehen, die mit einem mit der Beschichtung verbundenen zweiten Material aus faserverstärktem Kunststoff verbunden ist.

Gemäß einer weiteren vorteilhaften Ausführungsform besteht der faserverstärkte Kunststoff (GFK, SFK, CFK-karbonfaserverstärkter Kunststoff; engl. carbon fibre reinforced plastic, CFRP) des zweiten Materials aus in eine Harzmatrix eingebettete Faser aus Glas, Kohlenstoff oder einer Synthese- oder Chemiefaser.

Die Erfindung betrifft auch ein Verbindungselement zum Verbinden eines Metalls und faserverstärkten Kunststoff (GFK, SFK, CFK-karbonfaserverstärkter Kunststoff; engl. carbon fibre reinforced plastic, CFRP), das aus einem Materialverbund nach einem der Ansprüche 1 bis 6 besteht.

Gemäß einer weiteren Ausführungsform ist das Verbindungselement einstückig mit dem zu verbindenden Metall ausgearbeitet.

Gemäß einer weiteren Ausführungsform ist das Verbindungselement als Niet Pin, Schraube, Lasche oder Profilverbindung ausgearbeitet.

Nachfolgend wird die Erfindung anhand von speziellen Ausführungsbeispielen unter Zuhilfenahme von Figuren näher erläutert. Die Figuren zeigen im Einzelnen:
- Fig. 1: Materialverbund gemäß einer vorteilhaften Ausführungsform der Erfindung;
- Fig. 2: Ausführungsform eines Verbindungselements gemäß der vorliegenden Erfindung.

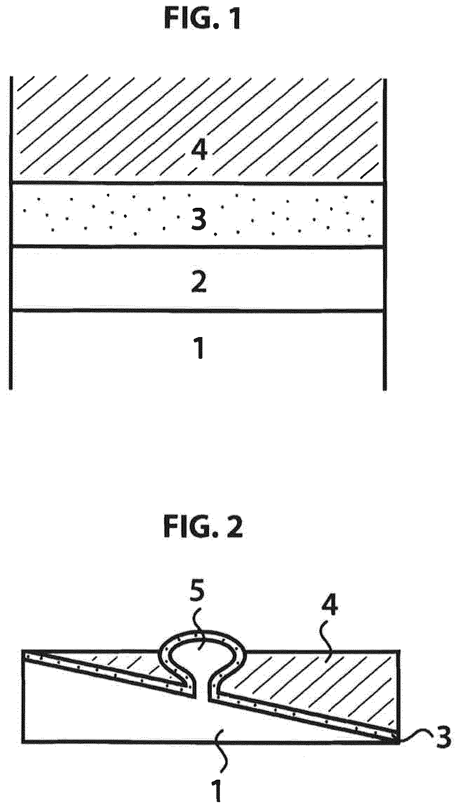

In Fig. 1 ist schematisch ein Materialverbund dargestellt bestehend aus einem Metall 1, einer Haftverbesserungszone 2, einer über der Haftverbesserungszone 2 aufgebrachten diamantähnlichen Kohlenstoffschicht (DLC) 3 und einem über der DLC-Schicht 3 aufgebrachten zweiten Material 4 aus faserverstärktem Kunststoff (GFK, SFK, CFK-karbonfaserverstärkter Kunststoff; engl. carbon fibre reinforced plastic, CFRP). Dieser faserverstärkte Kunststoff kann zum Beispiel glasfaserverstärkter Kunststoff (GFK), synthese- oder chemiefaserverstärkter Kunststoff (SFK) und kohlenstofffaserverstärkter Kunststoff (CFK) (karbonfaserverstärkter Kunststoff, engl. carbon fiber reinforced plastic CFRP) sein. Hierbei werden üblicherweise die jeweiligen Fasern oder Kombinationen verschiedener Fasern in eine Harzmatrix eingebettet. Das Metall 1 kann ein beispielsweise in der Flugzeugindustrie oder Automobilindustrie verwendetes Metall aus Aluminium, Titan, Stahl, Eisen, Kupfer, Magnesium, Hartmetall (beispielsweise gesintertes Carbidhartmetall aus beispielsweise 90-94 % Wolframcarbid und 6-10 % Cobalt) oder einer Legierung, die zumindest eines dieser Metalle enthält, bestehen. Zur Verbesserung der Haftung einer auf die Metalloberfläche aufzubringenden Beschichtung wird die Oberfläche 1 des Metalls mittels mechanischer Verfahren wie beispielsweise Strahlverfahren wie Glasperlenstrahlen, Korundstrahlen oder ähnlichem oder mittels chemischer Verfahren wie beispielsweise Ätzen mittels Säuren oder mittels physikalischen Verfahren wie beispielsweise Behandlung mittels Laserstrahlung oder Ionenbeschuss aufgeraut werden, so dass sich die Metalloberfläche mit einer darauf aufgebrachten Beschichtung verzahnt, um die Adhäsion der Beschichtung auf dem Metall 1 zu verbessern. Gleichzeit vergrößert sich durch die Aufrauhung vorteilhafterweise die Oberfläche des Metalls 1, damit auch die Beschichtungsfläche und somit die Wechselwirkungsfläche der DLC-Beschichtung 3 mit dem faserverstärkten Kunststoff 4, was zu einer weiteren Verbesserung der Haftung des Gesamtverbundes führt.

Durch beharrliche Forschungstätigkeit konnten die Erfinder des erfindungsgemäßen Materialverbunds herausfinden, dass die Verbindung zwischen Metall und kohlenstofffaserverstärktem Kunststoff deutlich verbessert werden kann, wenn zwischen dem faserverstärkten Kunststoff, insbesondere einem kohlenstofffaserverstärkten Kunststoff (CFK) und dem Metall eine diamantähnliche Kohlenstoffschicht (DLC) eingebracht wird. Neben dem Vorteil der Haftverbesserung erfüllt die DLC-Beschichtung einen weiteren wichtigen Vorteil, indem sie die Kontaktkorrosion zwischen Metall und faserverstärktem Kunststoff verhindert. Auch ohne das Einbringen einer Haftvermittlungszone 2 kann die Haftung der faserverstärkten Kunststoff-Schicht 4 auf dem Metallmaterial 1 durch das Einbringen der DLC-Schicht 3 im Vergleich zu einem Materialverbund nach dem Stand der Technik verbessert werden. Zur Herstellung wird auf die mit dem faserverstärkten Kunststoff zu verbindende Oberfläche des Metalls mittels eines geeigneten Schichtabscheidungsprozesses wie beispielsweise durch ein PVD- (Physical Vapour Deposition) oder CVD (Chemical Vapour Deposition) bzw. PECVD- (Plasma Enhanced Chemical Vapour Deposition) Verfahren oder einer Kombination oder Abwandlung dieser Verfahren wie beispielsweise einem PIII- (Plasma Immersions-Ionenimplantation) Verfahren auf dem Metall eine diamantähnliche Kohlenstoffbeschichtung in einer Dicke von beispielsweise 1 nm bis 10 µm aufgebracht. Wie oben erwähnt kann diese DLC-Beschichtung direkt auf die Metalloberfläche oder aber über einer vorbehandelten, z.B. aufgerauten, oder vorbeschichteten Metalloberfläche aufgebracht werden. Auf die DLC-beschichtete Metalloberfläche wird dann das faserverstärkte Material angekoppelt.
Es konnte ausserdem festgestellt werden, dass eine Verbesserung der Verbindungsfestigkeit innerhalb des erfindungsgemäßen Materialverbunds nicht nur unter normalen Umgebungsbedingungen wie beispielsweise Raumtemperatur und beispielsweise einer Luftfeuchtigkeit von 30-50 % erreicht werden kann, sondern bei extremeren Bedingungen wie erhöhter Temperatur beispielsweise im Bereich von 50-100°C und wie erhöhter Luftfeuchtigkeit beispielsweise im Bereich von 50-95 % die Verbesserung der Verbindungsfestigkeit im Vergleich zum unbeschichteten Verbund sogar noch deutlicher wird.

Üblicherweise stehen für die Ankopplung je nach Zustand des faserverstärkten Ausgangsmaterials verschiedene Prozesswege zur Verfügung. Beispielsweise kann der Materialverbund dadurch entstehen, indem das DLC-beschichtete Metallbauteil als Grundkörper durch Umwickeln von einzelnen Faserlagen und dem anschließenden Infiltrieren des Matrixharzes bzw. einem direktem Nasswickeln von Faserlagen anschließend beim Aushärten verbunden wird. Bereits vorgefertigte Geflechtmatten oder -schläuche können auch durch Drapierung auf dem DLC-beschichteten Metallbauteil mit anschließender Harzinfiltrierung angekoppelt werden. Eine weitere Möglichkeit besteht darin, auf die DLC-beschichtete Metalloberfläche direkt ein sogenanntes Faser-Prepreg, ein mit Epoxidharz vorbereitetes CFK-Halbzeug, aufzulegen und den Materialverbund allein durch Aushärten in einem Autoklaven oder mit einer Heißpresstechnik zu erreichen. Hierbei ist es nicht notwendig eine zusätzliche Harzlage oder Kleber zwischen DLC und Prepreg zu bringen, kann jedoch zusätzlich angewendet werden. Das Aushärten erfolgt bei den hier beschriebenen Prozesswegen dann typischerweise je nach Harzsystem bzw. Kleber in einem Temperaturbereich von 70-160°C bzw. 20-100°C über einen Zeitraum von 1 Minute bis zu 10 Stunden. In Autoklaven wird bei Prepreg-Materialien auch ein Druck von 2-5 bar verwendet.

In einer vorteilhaften Ausführungsform der Erfindung kann beispielsweise ein Prepreg-Material Hexcel 8552, Sigratex CE8201 oder Sigrafil CE1250 über Handablage auf die DLC-beschichteten Stahlkörper aufgelegt und im Autoklaven bei einer Temperatur von 130 °C für 2 Stunden ausgehärtet werden. In einer weiteren vorteilhaften Ausführungsform kann beispielsweise eine C030 50K oder eine C050 24K Faser in Verbindung mit Harzsystemen wie Sika CR132/CH132-7, LY8615 mit Aradur 8615 oder Araldit CY179/HY917/DY070 verwendet werden. In einer weiteren vorteilhaften Ausführung können beispielsweise DLC-beschichtete Metallbeschläge beispielsweise mit einem Strukturkleber Araldite 2015 mit dem CFK-Material verklebt werden. Die Erfindung ist jedoch nicht auf diese konkreten Ausführungsformen beschränkt. Der Schutzumfang wird allein durch die Schutzansprüche bestimmt.

Die gängigen Harzmaterialien von kohlenstofffaserverstärktem Kunststoff bestehen aus Epoxidharzen mit OH-/CH₃-/CH₂-/CH- und anderen Gruppen und Benzol-Ringen C₆H₆. Zu den diamantähnlichen Kohlenstoffschichten (DLC, Diamond Like Carbon) zählt man alle amorphen Kohlenstoffschichten, die beispielsweise in der VDI-Richtlinie 2840 ihrerseits in verschiedene Modifikationen (z.B. a-C, a-C:H, ta-C, u.a.) unterteilt werden. Die meisten Modifikationen weisen dabei sowohl sp2-hybridisierte (graphitische) sowie sp3-hybridisierte (diamantartige) Bindungen der Kohlenstoffatome auf. Da einige DLC-Schichten aus Kohlenwasserstoffen (CₓH_{y}) erzeugt werden und diese Schichten daher zwangsläufig einen gewissen H-Anteil aufweisen ist zur Charakterisierung von DLC außer dem sp2/sp3-Verhältnis auch noch der Anteil von Wasserstoff entscheidend. ta-C-Schichten enthalten keinen signifikanten H-Anteil, da sie nicht aus Kohlenwasserstoff, sondern aus festem Kohlenstoff (Grafit) üblicherweise über PVD-Verfahren wie Arc- (Lichtbogenverdampfung), Sputter-(Ionenzerstäubung) oder Laser- (PLD, Pulsed Laser Deposition) Verfahren gewonnen werden. Der sp3-Anteil in ta-C-Schichten kann je nach Herstellungsbedingungen zwischen 50 und 90% liegen. Damit reichen die ta-C-Schichten mit Abstand am weitesten an die Eigenschaften von kristallinem Diamant heran. Diamantähnliche Kohlenstoffschichten (DLC) können aber unter Anderem auch noch in den Modifikationen a-C:H, ta-C:H, a-C:H:X, a-C:H:Me oder in anderen Modifikationen, die üblicherweise über PECVD- oder Kombinationen aus PVD- und PECVD-Verfahren hergestellt werden, vorkommen. Bei den a-C:H:X-Modifikationen kann als Dotierungselement X beispielsweise Silizium, Sauerstoff, Stickstoff oder Fluor verwendet werden, bei den a-C:H:Me-Modifikationen als Metalldotierung beispielsweise Wolfram, Titan oder Chrom. Darüber hinaus kann die Schichtarchitektur innerhalb der DLC-Schicht beispielsweise als monolagiges, als mehrlagiges oder auch als gradiertes Schichtsystem aufgebaut sein.

Es wurde herausgefunden, dass sich zur Steigerung der Verbindungsfestigkeit von faserverstärkten Kunststoff/Metallhybridbauteilen der Einsatz von DLC als Grenzfläche zwischen Metall und faserverstärktem Kunststoff vorteilhaft auswirkt. Durch die im DLC vorliegenden C-H- und C-C-Bindungen sowie bei X-dotierten DLC-Schichten vorliegenden X-H- oder X-C-Bindungen können mechanisch sehr stabile chemische Bindungen wie kovalente Bindungen, Ionenbindungen, van-der-Waals-Kräfte und Wasserstoffbrückenbindungen oder auch elektrostatische Bindungen aufgrund verschiedener Elektronenaustrittsarbeiten zwischen den faserverstärkten Kunststoff-Epoxidharz-Molekülen wie CH₃-, CH₂-, CH-, OH-Gruppen sowie Benzol-Ringen und den C-H- sowie C-C- oder X-H- oder X-C-Bindungen des DLC aufgebaut werden. Auf der anderen Seite ist durch eine optimierte DLC-Schichtabscheidung auf dem Metallsubstrat wiederum eine gute Schichthaftung ebenfalls auf Basis chemischer Bindungen möglich. Somit kann durch Einbringen der DLC-Schicht als Übergangsstruktur zwischen Metall und faserverstärkten Kunststoff die Verbindungsfestigkeit von faserverstärkten Kunststoff-Metallhybridteilen deutlich verbessert werden.

Die verbesserte Verbindungsfestigkeit von faserverstärkten Kunststoff-Metallhybridteilen wird wie in Fig. 1 dargestellt zusätzlich durch mechanische Aufrauung und damit auch einer Vergrößerung der Wechselwirkungsfläche zwischen DLC und dem faserverstärkten Kunststoff und Einbringen einer Haftverbesserungszone 2 zwischen der Metalloberfläche und der DLC-Beschichtung noch weiter verbessert werden. Die Haftverbesserungszone 2 kann, wie es in der Dünnschichttechnik üblich ist, neben der topographischen Modifizierung zusätzlich eine oder mehrere Zwischenschichten beinhalten, die beispielsweise Cr, W, Ti, Si oder Substratmetallelemente sowie auch Nitride, Oxide oder Carbide daraus enthalten.

Fig. 2 zeigt beispielhaft eine Ausführungsform eines Verbindungselements gemäß der vorliegenden Erfindung. In der in Fig. 2 gezeigten speziellen Ausführungsform ist das Verbindungselement 5 einstückig aus dem ersten Material 1 (Metall) gebildet, so dass der erfindungsgemäße Materialverbund an der Grenzfläche zwischen dem ersten Material 1 (Metall) und dem zweiten Material aus faserverstärkten Kunststoff gebildet wird. Hierbei wird die diamantähnliche Kohlenstoffschicht (DLC) zur Verbesserung der Verbindungsfestigkeit je nach Anwendungsbereich ganz oder teilweise auf der Grenzfläche zwischen dem ersten Material 1 (Metall) und dem zweiten Material aus faserverstärkten Kunststoff aufgebracht werden. Das Verbindungselement muss jedoch nicht notwendigerweise einstückig aus dem ersten Material 1 gebildet sein, sondern kann auch als separates Element wie beispielsweise als Niete, Pin, Lasche, Schraube, Buchse, Stift, Gewindeelement oder Profilverbindung ausgebildet sein.

## Patentansprüche

1. Materialverbund bestehend aus
einem ersten Material (1) aus Metall und
einer auf zumindest einer ersten Oberfläche des ersten Materials aufgebrachten Beschichtung (3), die diamantähnlichen Kohlenstoff (DLC) enthält und einem mit der Beschichtung verbundenen zweiten Material (4) aus faserverstärktem Kunststoff, wobei die auf zumindest einer ersten Oberfläche des ersten Materials aufgebrachte Beschichtung (3) zwischen dem diamantähnlichen Kohlenstoff und der ersten Oberfläche des ersten Materials eine Haftverbesserungszone (2) aufweist, die eine Struktur aufweist die durch einen mechanischen, chemischen oder physikalischen Prozess erhaltene Aufrauung und damit durch Vergrößerung der Wechselwirkungsfläche zwischen der Beschichtung (3) und dem zweiten Material (4) geeignet ist eine Verzahnung der beschichteten ersten Oberfläche des ersten Materials (1) mit dem zweiten Material (4) zu gewährleisten.

2. Materialverbund nach Anspruch 1, wobei die Haftverbesserungszone (2) eine oder mehrere Zwischenschichten beinhaltet, die eines oder mehrere aus den Elementen Cr, W, Ti, Si oder Substratmetallelemente sowie auch Nitride, Oxide oder Carbide daraus enthalten.

3. Materialverbund nach einem der Ansprüche 1 bis 2, wobei die auf zumindest einer ersten Oberfläche des ersten Materials (1) aufgebrachte Beschichtung (3) eine Dicke in einem Bereich von 1 nm bis 10 µm aufweist.

4. Materialverbund nach einem der Ansprüche 1 bis 3, wobei das Metall des ersten Materials (1) Aluminium, Titan, Stahl, Eisen, Kupfer, Magnesium, Hartmetall oder eine Legierung die zumindest eines dieser Metalle enthält ist.

5. Materialverbund nach einem der Ansprüche 1 bis 4, wobei auch eine zweite, der ersten Oberfläche gegenüberliegende, Oberfläche des ersten Materials (1) eine Beschichtung die diamantähnlichen Kohlenstoff enthält aufweist und die mit einem mit der Beschichtung (3) verbundenen zweiten Material (4) aus faserverstärktem Kunststoff verbunden ist.

6. Materialverbund nach einem der Ansprüche 1 bis 5, wobei der faserverstärkte Kunststoff des zweiten Materials (4) aus in eine Harzmatrix eingebetteten Fasern aus Glas, Kohlenstoff oder einer Synthese- oder Chemiefaser besteht.

7. Verbindungselement (5) zur Verbindung eines Metalls und faserverstärktem Kunststoff bestehend aus dem Materialverbund nach einem der Ansprüche 1 bis 6.

8. Verbindungselement nach Anspruch 7, wobei das Verbindungselement (5) einstückig aus dem zu verbindenden Metall ausgearbeitet ist.

9. Verbindungselement nach Anspruch 7, wobei das Verbindungselement (5) als Niete, Pin, Lasche, Buchse, Stift, Gewindeelement oder als Schraube ausgearbeitet ist.

## Claims

1. Material composite consisting of a first material (1) composed of metal and a coating (3) applied to at least one first surface of the first material, said coating containing diamond-like carbon (DLC) and
a second material (4) composed of fibre-reinforced plastics connected to the coating, wherein the coating (3) applied to at least one first surface of the first material has, between the diamond-like carbon and the first surface of the first material, an adhesion-improving zone (2) which has a structure which due to a roughening obtained through a mechanical, chemical or physical process and thereby through enlargement of the interaction area between the coating (3) and the second material (4) is suitable for ensuring an interlocking of the coated first surface of the first material (1) with the second material (4).

2. Material composite according to claim 1, wherein the adhesion-improving zone (2) contains one or more intermediate layers which contain one or more of the elements Cr, W, Ti, Si or substrate metal elements and also nitrides, oxides or carbides thereof.

3. Material composite according to one of the claims 1 to 2, wherein the coating (3) applied to at least one first surface of the first material (1) has a thickness in the range from 1 nm to 10 µm.

4. Material composite according to one of the claims 1 to 3, wherein the metal of the first material (1) is aluminium, titanium, steel, iron, copper, magnesium, hard metal or an alloy which contains at least one of these metals.

5. Material composite according to one of the claims 1 to 4, wherein a second surface of the first material (1) lying opposite the first surface also comprises a coating which contains diamond-like carbon and which is connected to a second material (4) composed of fibre-reinforced plastics which is connected to the coating (3).

6. Material composite according to one of the claims 1 to 5, wherein the fibre-reinforced plastics of the second material (4) consists of fibres of glass, plastics or a synthetic or chemical fibre embedded in a resin matrix.

7. Connecting element (5) for connecting a metal and a fibre-reinforced plastics material consisting of the material composite according to one of the claims 1 to 6.

8. Connecting element according to claim 7, wherein the connecting element (5) is constructed in one piece from the metal to be connected.

9. Connecting element according to claim 7, wherein the connecting element (5) is constructed as a rivet, pin, tongue, bushing, bolt, threaded element or screw.

## Revendications

1. Matériau composite composé de
un premier matériau (1) en métal et
un revêtement (3) appliqué sur au moins une première surface du premier matériau, qui contient du carbone de type diamant (DLC) et
un deuxième matériau (4) en matière synthétique renforcée en fibres relié au revêtement, dans lequel le revêtement (3) appliqué sur au moins une première surface du premier matériau présente entre le carbone de type diamant et la première surface du premier matériau, une zone d'amélioration d'adhérence (2), qui présente une structure qui est adaptée par rugosité obtenue par un processus mécanique, chimique ou physique et ainsi par augmentation de la surface d'interaction entre le revêtement (3) et le deuxième matériau (4) pour garantir un engrenage de la première surface revêtue du premier matériau (1) avec le deuxième matériau (4).

2. Matériau composite selon la revendication 1, dans lequel la zone d'amélioration d'adhérence (2) inclut une ou plusieurs couches intermédiaires, qui contiennent un ou plusieurs parmi les éléments Cr, W, Ti, Si ou éléments de métal substrat ainsi que nitrures, oxydes ou carbures de ceux-ci.

3. Matériau composite selon l'une quelconque des revendications 1 à 2, dans lequel le revêtement (3) appliqué sur au moins une première surface du premier matériau (1) présente une épaisseur dans une plage de 1 nm à 10µm.

4. Matériau composite selon l'une quelconque des revendications 1 à 3, dans lequel le métal du premier matériau (1) est de l'aluminium, du titane, de l'acier, du fer, du cuivre, du magnésium, du métal dur ou un alliage qui contient au moins un de ces métaux.

5. Matériau composite selon l'une quelconque des revendications 1 à 4, dans lequel aussi une deuxième surface du premier matériau (1), opposée à la première surface, présente un revêtement qui contient le carbone de type diamant et qui est relié à un deuxième matériau (4) en matière synthétique renforcée en fibres relié au revêtement (3).

6. Matériau composite selon l'une quelconque des revendications 1 à 5, dans lequel la matière synthétique renforcée en fibres du deuxième matériau (4) se compose de fibres incorporées dans une matrice de résine en verre, carbone ou une fibre synthétique ou chimique.

7. Élément de liaison (5) pour la liaison d'un métal et de matière synthétique renforcée en fibres se composant du matériau composite selon l'une quelconque des revendications 1 à 6.

8. Élément de liaison selon la revendication 7, dans lequel l'élément de liaison (5) est réalisé d'un seul tenant à partir du métal à relier.

9. Élément de liaison selon la revendication 7, dans lequel l'élément de liaison (5) est réalisé en tant que rivet, broche, patte, douille, tige, élément fileté ou en tant que vis.
